# EUROPÄISCHE PATENTSCHRIFT

(11) **EP 3 365 194 B1**
(45) Veröffentlichungstag und Bekanntmachung des Hinweises auf die Patenterteilung: **12.02.2020**
(21) Anmeldenummer: 16766545.4
(22) Anmeldetag: 16.09.2016
(51) Int. Cl.: B60P 1/00, B65G 69/28

(54) **LADERAMPENSICHERUNGSEINRICHTUNG**
LOADING-RAMP SAFETY DEVICE
DISPOSITIF DE SÉCURISATION DE RAMPE DE CHARGEMENT

(30) Priorität: 21.10.2015 DE 102015117957
(43) Veröffentlichungstag der Anmeldung: 29.08.2018
(73) Patentinhaber: Catac Capital GmbH, 5081 Anif (AT)
(72) Erfinder: MARSHALL, Michael, 5081 Anif (AT)
(74) Vertreter: Rothkopf, Ferdinand
(86) Internationale Anmeldenummer: PCT/EP2016/071918
(87) Internationale Veröffentlichungsnummer: WO 2017/067723

(56) Entgegenhaltungen:
- EP-A1- 0 452 519
- FR-A1- 2 672 578
- US-B1- 6 812 849
- US-B2- 7 823 239

## Beschreibung

### Hintergrund der Erfindung

Die Erfindung betrifft eine Laderampensicherungseinrichtung für eine auf einen Lastkraftwagen zu legende Laderampe, die mit einer der Laderampe zugeordneten Signalvorrichtung und einer dem Lastkraftwagen zugeordneten Sperrvorrichtung zu betreiben ist. Es kann sich aber auch um einen Hubtisch handeln oder eine Kombination aus Hubtisch und Laderampe bzw. Überladebrücke.

Laderampen sind Hilfsmittel um ein Be- und Entladen von Nutzfahrzeugen, insbesondere von Lastkraftwagen, zu ermöglichen. Die Laderampen, welche auch als Überladebrücken bezeichnet werden, stellen in der Regel eine Verbindung von einer Ladefläche eines Lastkraftwagens zu einer Ladefläche eines Gebäudes oder dergleichen her. Mittels der Laderampe wird dabei ein Abstand zwischen der Ladefläche des Lastkraftwagens und der Ladefläche des Gebäudes überbrückt, da der Lastkraftwagen allein nicht unmittelbar an die Ladefläche von Gebäuden andocken kann. Da Ladeflächen von Lastkraftwagen von der Fahrbahn aus gemessen zudem unterschiedliche Höhen aufweisen, wird mittels Laderampen auch ein unterschiedliches Höhenniveau der Ladeflächen der Gebäude und der Ladeflächen der Lastkraftwagen ausgeglichen. Die Laderampen dienen ferner dazu, dass z. B. mittels eines Hubwagens oder eines Gabelstaplers auf die Ladefläche des Lastkraftwagens gefahren werden und dadurch insbesondere die Ladefläche des Lastkraftwagens mit Paletten und Gegenständen Be- oder Entladen werden kann.

Bei diesem Be- oder Entladen des Lastkraftwagens stellt ein unbeabsichtigtes Wegrollen oder zu frühes Wegfahren des Lastkraftwagens ein Unfallrisiko dar, weil dabei insbesondere ein Hubwagen oder Gabelstapler samt dessen Bediener von der Laderampe stürzen kann. Ein Wegrollen oder zu frühes Wegfahren von Lastkraftwagen an Laderampen ist daher möglichst zu verhindern. Bei derartigen Unfällen ist es bereits zu schweren Verletzungen, Verstümmelungen und auch zu Toten gekommen.

Es ist allgemein bekannt, mittels eines optischen Signals, insbesondere in der Art einer Ampel, einem Fahrer des Lastkraftwagens zu signalisieren, ob er den Lastkraftwagen von der Laderampe wegbewegen darf oder nicht.

Aus EP 0 452 519 ist eine Vorrichtung zum Festhalten eines Fahrzeugs an einer Laderampe bekannt, welche nach dem Andocken wirksam wird und so ein unbeabsichtigtes Wegrollen oder ein zu frühes Wegfahren des Fahrzeugs während des Verladevorgangs auf mechanischem Wege verhindert.

Aus US 6 812 849 B1 ist ein automatisches Lastwagenkontrollsystem bekannt, mit dem ein Lastkraftwagen mittels Sperren seines Getriebes und/oder seiner Bremse vom Wegfahren von einem Ladedock gehindert werden kann, wenn der Lastkraftwagen ein entsprechendes Signal erhält. Dabei ist das Signal abhängig von einer Bewegung eines Ladedock-Tors.

Aus FR 2 672 578 A1 ist ein Signalsystem bekannt, das dazu angepasst ist, eine Sirene auszulösen und/oder ein Lichtsignal abzugeben, wenn eine an einer Tür eines Lastkraftwagens eingeklemmte Taschenlampe oder ein unter einem Reifen des Lastkraftwagens angeordneter Unterlegkeil entfernt wird, während sich ein beweglicher Teil einer Laderampe in einer am Lastkraftwagen aufliegenden Position befindet. Zum Erkennen der derartigen Position ist eine elektrische Vorrichtung vorgesehen, die in einem elektromechanischen Kontakt mit dem beweglichen Teil der Laderampe steht. Die ausgelöste Sirene und/oder das Lichtsignal soll dem Fahrer signalisieren, dass die Laderampe noch auf dem Lastkraftwagen aufliegt. Das Wegbewegen des Lastkraftwagens liegt allein im Ermessen des Fahrers.

### Zugrundeliegende Aufgabe

Der Erfindung liegt die Aufgabe zugrunde eine Laderampensicherungseinrichtung zu schaffen, mittels der auf besonders vorteilhafte Weise ein Lastkraftwagen an einem ansonsten möglichen Wegbewegen von der Laderampe gehindert ist.

### Erfindungsgemäße Lösung

Diese Aufgabe ist erfindungsgemäß mit einer Laderampensicherungseinrichtung für eine auf einen Lastkraftwagen zu legende Laderampe mit einer der Laderampe zugeordneten Signalvorrichtung und einer dem Lastkraftwagen zugeordneten Sperrvorrichtung geschaffen, wobei die Signalvorrichtung dazu eingerichtet ist, ein Signal über die Ladesituation an der Laderampe zu senden. Dabei ist erfindungsgemäß die Sperrvorrichtung an Bord des Lastkraftwagens angeordnet und ferner dazu eingerichtet, das Signal zu empfangen und gemäß dem Signal den Lastkraftwagen selbst an einem Wegbewegen von der Laderampe zu hindern.

Bei herkömmlichen Laderampensicherungseinrichtungen, bei denen mittels einer mechanischen Einrichtung der Lastkraftwagen an einem Wegbewegen gehindert ist, können durch die mechanische Einrichtung Schäden am Lastkraftwagen sowie an der Laderampensicherungseinrichtung entstehen. Die Erfindung ist eine Hilfe, um derartiges zu verhindern und Arbeitnehmer sowie Betriebsmittel, wie Lastwagen und Stapler, zu schützen.

Wenn nur mittels eines optischen Signals, etwa einer Ampelanlage, einem Fahrer des Lastkraftwagens signalisiert wird, ob er den Lastkraftwagen von der Laderampe wegbewegen darf, ist nicht wirklich sichergestellt, dass der Fahrer dieses Signal fehlerlos beachtet. Ferner kann es passieren, dass die Ampelanlage ausfällt, sie kann verdeckt sein oder sie kann auch gegebenenfalls vom Fahrer schlicht missachtet werden.

Bei der erfindungsgemäßen Laderampensicherungseinrichtung sendet hingegen die Signalvorrichtung ein Signal über eine Ladesituation an der Laderampe aus. Die Signalvorrichtung stellt also fest, welche Ladesituation bei der Laderampe vorherrscht. Ist die Laderampe nicht mit dem Lastkraftwagen verbunden, ist die Ladesituation so, dass ein Be- oder Entladen des Lastkraftwagens nicht möglich ist. Ist die Laderampe mit dem Lastkraftwagen verbunden, ist die Ladesituation so, dass der Lastkraftwagen beladen oder entladen werden könnte.

Bei dieser zweitgenannten Ladesituation übermittelt die erfindungsgemäße Signalvorrichtung dann vorteilhaft ein entsprechendes Signal an die Sperrvorrichtung. Vorzugsweise wird das Signal dazu an die Sperrvorrichtung drahtlos übertragen. Die Signalübertragung kann auch über eine Kabelverbindung bewerkstelligt werden. Beispiele für die Übertragung der Signale Funkwellen, Bluetooth, WLAN oder BUS Systeme. Die Sperrvorrichtung ist an Bord des Lastkraftwagens angeordnet, d.h. insbesondere, dass sie sich an bzw. in dem Lastkraftwagen befindet und dort direkt auf diesen einwirkt. Die Sperrvorrichtung verhindert so am Lastkraftwagen selbst, dass dieser von der Laderampe wegbewegt werden könnte. Die erfindungsgemäße Sperrvorrichtung befindet sich also am Lastkraftwagen selber und wird auch zusammen mit diesem bewegt bzw. mit diesem mitbewegt. Wenn der Lastkraftwagen wegfährt, befindet sich auch die Sperrvorrichtung an Bord des Lastkraftwagens. Sie kann dadurch unmittelbar auf den Lastkraftwagen einwirken und braucht dies nicht etwa als mechanische Sperre von außen zu tun.

Ferner ist die erfindungsgemäße Sperrvorrichtung vorzugsweise mit einer Empfangseinrichtung versehen, die zum Empfangen des Signals der Signalvorrichtung angepasst ist. Die Empfangseinrichtung dient also zum Empfangen des genannten Signals. Die Empfangseinrichtung ist vorzugsweise am Lastkraftwagen selbst, insbesondere an einem Zugfahrzeug des Lastkraftwagens und/oder an einem Anhängefahrzeug des Lastkraftwagens angeordnet. Die Empfangseinrichtung kann dann unmittelbar auf den Lastkraftwagen einwirken.

Besonders bevorzugt ist die Empfangseinrichtung an einem Übergangsbereich vom Lastkraftwagen zur dort aufliegenden Laderampe angeordnet. Diese Anordnung ermöglicht, dass ein von der Signaleinrichtung ausgesendetes Signal auf einem kurzen, weitgehend ungestörten Signalweg an die Empfangseinrichtung übermittelt werden kann. Besonders vorteilhaft ist auch, wenn das erfindungsgemäße Signal nur eine vergleichsweise geringe Reichweite aufweist, da das Signal dann wenig Störpotential für andere Signalanlagen darstellt.

In vorteilhafter Weise ist ferner die Sperrvorrichtung dazu eingerichtet, eine Bremse des Lastkraftwagens zu sperren. Bremsen an Lastkraftwagen sind, je nach Art der Kraftübertragung einer Bremskraft, in der Regel Druckluftbremsen oder Hydraulikbremsen. Die Bremskraft wirkt in der Regel mittels einer Bremsbacke auf eine Scheibe oder eine Trommel und verhindert, dass sich Räder des Lastkraftwagens drehen lassen. Die derart blockierten Räder verhindern dann das Wegbewegen des Lastkraftwagens. Mit der erfindungsgemäßen Sperrvorrichtung ist dann mittels eines einfachen, technisch leicht zu realisierenden Einwirkens auf die Bremsen des jeweiligen Lastkraftwagens eine sichere und zugleich beschädigungslose sowie verschleißarme Sicherheitseinrichtung geschaffen. Das Wegfahren des Lastkraftwagens kann aber auch dadurch verhindert werden, dass über eine Empfangseinheit am Lastkraftwagen ein Einlegen eines Ganges elektronisch oder mechanisch verhindert wird.

Zusätzlich oder alternativ ist die erfindungsgemäße Sperrvorrichtung daher dazu eingerichtet, ein Getriebe des Lastkraftwagens zu sperren. Über das Getriebe wird bei Lastkraftwagen eine Kraft von einem Motor des Lastkraftwagens an die angetriebenen Räder übertragen. Das erfindungsgemäße Sperren dieses Getriebes verhindert also, dass die von dem Motor aufgebrachte Kraft an die Räder weitergeleitet werden kann. Das Wegbewegen durch Wegfahren des Lastkraftwagens ist dann entsprechend verhindert. Insbesondere kann dabei gemäß der Erfindung ein Wegfahren des Lastkraftwagens verhindert werden, indem ein Einlegen eines Ganges des Getriebes oder ein Kuppeln mittels einer Kupplung gesperrt wird.

In bevorzugter Weise ist zusätzlich oder alternativ die Sperrvorrichtung dazu eingerichtet, einen Motorstarter des Lastkraftwagens zu sperren. Mittels des Motorstarters wird der Motor des zugehörigen Lastkraftwagens gestartet bzw. angelassen. Das erfindungsgemäße Sperren dieses Motorstarters verhindert also bereits ein Starten des Motors und verhindert so auf einfache und zugleich sichere Weise ein Wegfahren des Lastkraftwagens. Der Fahrer wird also bereits bei einem Start des Motors daran gehindert, von der Laderampe wegzufahren. Vorzugsweise wird ein Starten des Motors durch ein Unterbrechen eines Stromkreises des Motorstarters unterbunden.

Erfindungsgemäß vorteilhaft ist die Signalvorrichtung mit einer Erkennungseinrichtung versehen, mittels der die örtliche Lage der Laderampe zu ermitteln ist. Die Erkennungseinrichtung erkennt anhand der örtlichen Lage bzw. Position der Laderampe deren Ladesituation. Dabei wird insbesondere überprüft, ob die Laderampe nach oben weggeklappt ist, oder ob die Laderampe nach unten geklappt ist, auf dem Lastkraftwagen aufliegt, und so eine Verbindung zum Lastkraftwagen herstellt. Besonders bevorzugt ist die Erkennungseinrichtung zum Erkennen der örtlichen Lage der Laderampe an einer Einrichtung zum Bewegen dieser Laderampe, wie beispielsweise an einem dortigen hydraulischen Zylinder, angeordnet.

Ferner ist bevorzugt die Erkennungseinrichtung mit einem Sensor gestaltet, mittels dem die örtliche Lage der Laderampe zu ermitteln ist. Ein Sensor nimmt den Wert einer zu messenden Größe auf, um diese zu messende Größe zu bestimmen. Der Sensor ermittelt hier, in welcher örtlichen Lage die Laderampe ist. Insbesondere sind dafür Sensoren geeignet, die anhand von Wellen unterschiedlicher Frequenz die Position der Laderampe erkennen. Der Sensor sendet Wellen aus und empfängt von einem Objekt, insbesondere der Laderampe oder dem Lastkraftwagen, zurückgeworfene Wellen. So kann eine Entfernung zu dem Objekt oder eine räumliche Lage des Objekts ermittelt werden. Insbesondere werden dabei Wellen im Ultraschallbereich, Funkbereich, Radarbereich oder es werden Lichtwellen gesendet. Besonders vorteilhaft sind hier also Ultraschallsensoren, RFID-Sensoren, Radarsensoren oder optische Sensoren, wie insbesondere Lichtschranken. Diese Art von Sensoren ist wartungsfrei, berührungslos und schmutzunempfindlich. Die Lage der Laderampe ist mittels dieser Sensoren bei jeder Ladesituation zu bestimmen.

In vorteilhafter Weise ist ferner zusätzlich oder alternativ die Erkennungseinrichtung mit einem Drucksensor gestaltet, mittels dem ein Aufliegen der Laderampe auf dem Lastkraftwagen zu ermitteln ist. Der Drucksensor ermittelt ob auf ihn eine Kraft ausgeübt wird. Insbesondere wird dabei die Kraft gemessen, die ein Gewicht der Laderampe beim Aufliegen auf dem Lastkraftwagen erzeugt. Damit wird auf einfache Weise die hier relevante Information ermittelt, nämlich, ob die Laderampe aufliegt oder nicht.

Erfindungsgemäß vorteilhaft ist alternativ oder zusätzlich zu den vorher genannten Möglichkeiten die Erkennungseinrichtung mit einem Näherungssensor gestaltet, mittels dem ein Aufliegen der Laderampe auf dem Lastkraftwagen zu ermitteln ist. Ein Näherungssensor stellt fest ob sich ein Objekt dem Erfassungsbereich des Sensors nähert bzw. sich darin befindet und erzeuget ein Signal. Näherungssensoren sind insbesondere induktive Sensoren, kapazitive Sensoren und magnetische Sensoren. Der Näherungssensor erkennt dabei vorzugsweise nicht nur ob die Laderampe auf dem Lastkraftwagen aufliegt, sondern aktiviert bereits die Sperrvorrichtung, wenn sich die Laderampe an den Lastkraftwagen annähert. Der Näherungssensor erkennt berührungsfrei und dadurch besonders wartungsarm die Ladesituation der Laderampe.

Besonders bevorzugt ist die Signalvorrichtung mit einer Sendeinrichtung versehen, mittels der das Signal über die Ladesituation an der Laderampe der Signalvorrichtung an den Lastkraftwagen zu übertragen ist. Die Sendeeinrichtung übermittelt ein Signal von der Sendeeinrichtung zu der Empfangseinrichtung. Insbesondere ist die Übermittlung des Signals mittels Funk realisiert. Ein Kabel ist somit für die Signalübertragung nicht notwendig. Insbesondere ist vorteilhaft das Signal von dem zu be- oder entladenen Endbereich des Lastkraftwagens zu einem Fahrerbereich des Lastkraftwagens zu übertragen.

### Kurzbeschreibunq der Zeichnungen

Nachfolgend wird ein Ausführungsbeispiel der erfindungsgemäßen Lösung anhand der beigefügten schematischen Zeichnungen näher erläutert. Es zeigt:
- Fig. 1: eine Seitenansicht eines Ausführungsbeispiels einer erfindungsgemäßen Laderampensicherungseinrichtung mit zugehöriger Laderampe und einem daran angedockten Lastkraftwagen,
- Fig. 2: eine Seitenansicht der Laderampe gemäß Fig. 1 in einem Betriebszustand,
- Fig. 3: eine Seitenansicht der Laderampe gemäß Fig. 1 in einem Wartezustand,
- Fig. 4: eine Seitenansicht eines weiteren Ausführungsbeispiels einer erfindungsgemäßen Laderampensicherungseinrichtung mit zugehöriger Laderampe, und
- Fig. 5: eine Seitenansicht der Laderampensicherungseinrichtung gemäß Fig. 1 mit einem daran angedocktem Lastkraftwagen mit einem Anhängefahrzeug.

### Detaillierte Beschreibung der Ausführunqsbeispiele

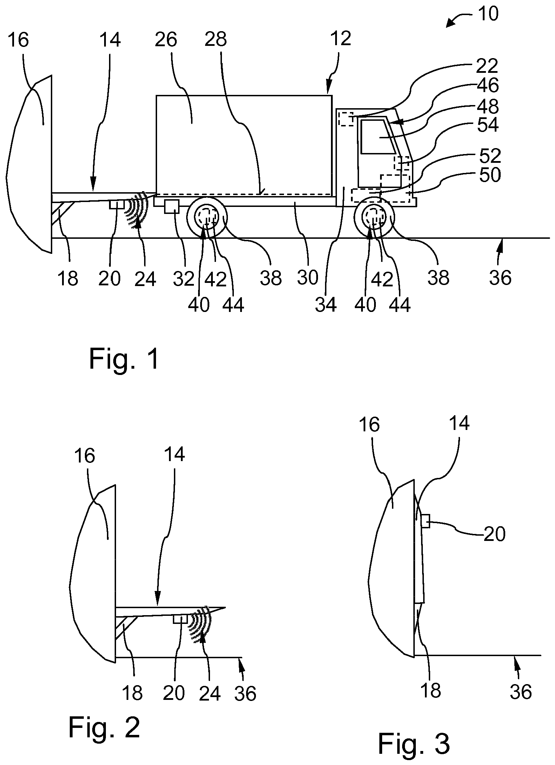

Fig. 1 zeigt eine Laderampensicherungseinrichtung 10 mit einem Lastkraftwagen 12, der mittels einer Laderampe 14 mit einem Lager 16 verbunden ist. Die Laderampe 14 dieser Bauweise wird auch als eine Überladebrücke bezeichnet.

An der Laderampe 14 befindet sich ein Hubzylinder 18 und eine Signalvorrichtung 20, die mit einer Sperrvorrichtung 22 im Lastkraftwagen 12 mittels eines Signals 24 zu verbinden ist.

Der Lastkraftwagen 12 weist einen Laderaum 26 mit einer Ladefläche 28 auf, die sich auf einem Rahmen 30 des Lastkraftwagens 12 befindet. An dem Rahmen 30 ist eine Empfangseinrichtung 32 angeordnet. Die Empfangseinrichtung 32 kann alternativ auch in oder bei einem Führerhaus 34 des Lastkraftwagens 12 angeordnet sein.

An dem Rahmen 30 befinden sich ferner zu einer Fahrfläche 36 hin gerichtete Räder 38. Die Räder 38 befinden hinten am Lastkraftwagen 12 unter dessen Laderaum 26 und vorne unter dessen Führerhaus 34. Dabei weist jedes dieser Räder 38 eine Bremse 40 auf, die eine Bremsscheibe 42 und einen Bremssattel 44 beinhalten.

Zum Betreten des Führerhauses 34 ist eine Tür 46 mit einem Fenster 48 vorgesehen. Unter dem Führerhaus 34 ist ein Motor 50 mit einem daran kraftübertragend angekoppelten Getriebe 52 vorgesehen. Dieser Motor 50 kann mittels eines Motorstarters 54 gestartet werden.

Mit dem Hubzylinder 18 kann die Laderampe 14 um eine hier nicht dargestellte Achse geschwenkt werden. Mit einem Schwenken nach unten in Richtung der Fahrfläche 36 stellt die Laderampe 14 dabei eine Kopplung bzw. Verbindung zu der Ladefläche 28 des Lastkraftwagens 12 her. Über die Laderampe 14 ist dann eine hier nicht dargestellte Ladung zwischen der Ladefläche 28 und dem Lager 16 zu be- oder entladen.

Die Signalvorrichtung 20 übermittelt mittels des Signals 24 an die Empfangseinrichtung 32, ob die Laderampe 14 mit dem Lastkraftwagen 12 aufgelegt, gekoppelt bzw. verbunden ist oder nicht. Wenn die Laderampe 14 aufgelegt, angekoppelt bzw. verbunden ist, verhindert die Sperrvorrichtung 22 durch ein Blockieren der Bremse 40, ein Blockieren des Motorstarters 54 und/oder ein Blockieren des Getriebes 52, dass der Lastkraftwagen 12 von der Laderampe 14 wegzubewegen ist.

Fig. 2 zeigt die Laderampe 14 des Lagers 16, die mittels des Hubzylinders 18 um die Achse nach unten, parallel zur Fahrfläche 36 geklappt ist. An dieser Laderampe 14 befindet sich die Signalvorrichtung 20, die das Signal 24 sendet, an deren Unterseite. Da die Laderampe 14 parallel zur Fahrfläche 36 ist, wird das Signal 24 auch parallel zur Fahrfläche 36 in Richtung des Lastkraftwagens 12 versendet. Die Laderampe 14 schirmt diese Signalaussendung in vorteilhafter Weise nach oben hin ab.

Fig. 3 zeigt ebenso die Laderampe 14 an dem Lager 16. Diese Laderampe 14 ist mittels des Hubzylinders 18 nach oben weggeklappt. Die an der Laderampe 14 befindende Signalvorrichtung 20 ist dabei mit der Laderampe 14 auch nach oben weggeklappt. Da sich diese Laderampe 14 in eingeklappten Wartezustand befindet, wird dieser Zustand entsprechend erkannt und kein Signal 24 von dieser Signalvorrichtung 20 ausgesendet. Alternativ kann eine Signalvorrichtung 20 dann auch ein Signal 24 nach oben hin senden, welches entsprechend aber nicht von einem Lastkraftwagen 12 empfangen werden kann.

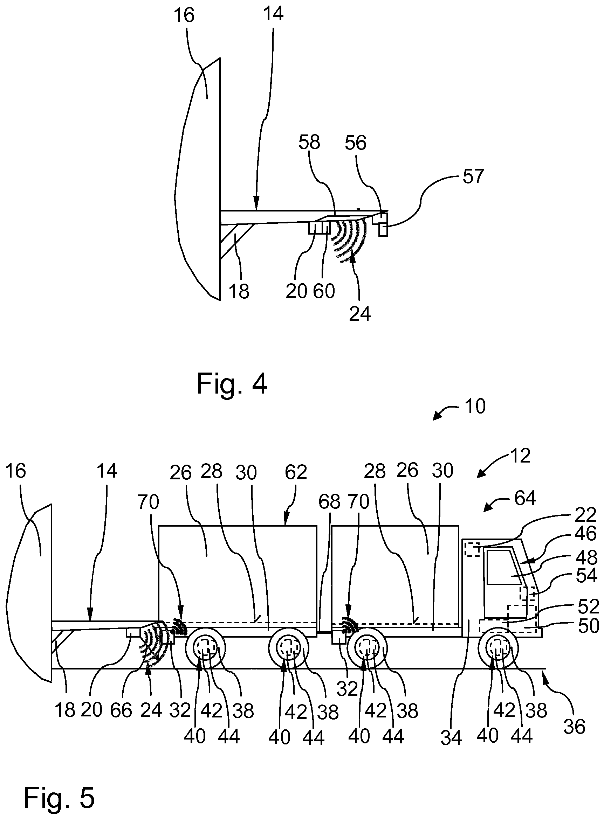

Fig. 4 zeigt eine weitere Laderampe 14 mit dem zugehörigen Hubzylinder 18 an dem Lager 16. An dieser Laderampe 14 ist an seinem vom Lager 16 abgewandtem Endbereich unterseitig eine Erkennungseinrichtung 56 mit einem Sensor 57 angebracht die mittels einer Signalleitung 58 mit der Signalvorrichtung 20 verbunden ist. Diese Signalvorrichtung 20 sendet mittels einer Sendeeinrichtung 60 das Signal 24 aus. Der Sensor 57 dient dazu, zu erkennen, ob die Laderampe 14 an einem Lastkraftwagen 12 aufliegt, oder nicht.

Die Fig. 5 veranschaulicht eine alternative Ausführungsform der Laderampensicherungseinrichtung 10 mit einem Lastkraftwagen 12 bestehend aus einem Zugfahrzeug 64 und einem Anhängefahrzeug 62. Das Anhängefahrzeug 62 umfasst den Laderaum 26 auf dem zugehörigen Rahmen 30 mit der dortigen Empfangseinrichtung 32 und einem Koppelelement 68. An dem Rahmen 30 befindet sich die Empfangseinrichtung 32 an dem vom Zugfahrzeug 64 abgewandtem, hinteren Endbereich.

Dem Anhängefahrzeug 62 sind ebenfalls Räder 38 mit Bremsen 40 zugeordnet. Das Anhängefahrzeug 62 stellt mittels eines Koppelelements 68 eine Verbindung zwischen dem Anhängefahrzeug 62 und dem Zugfahrzeug 64 her. Das Zugfahrzeug 64 ist ähnlich zum Lastkraftwagen gemäß Fig. 1 mit Laderaum 26 und Führerhaus 34 gestaltet. Bei dem Führerhaus 34 befindet sich die Sperrvorrichtung 22 für den Motorstarter 54 und/oder das Getriebe 52.

Der Laderaum 26 des Anhängefahrzeugs 62 ist mit der Laderampe 14 an das Lager 16 gekoppelt. An dieser Laderampe 14 befindet sich an der dem Lager 16 zugewandten Seite der Hubzylinder 18 und an dem dem Anhängefahrzeug 62 zugewandten Endbereich der Laderampe die Signalvorrichtung 20. Diese Signalvorrichtung 20 sendet ein Signal 24 mit einer geringen Reichweite 66 aus, dass von der Empfangseinrichtung 32 am hinteren Ende des Rahmes 30 des Anhängefahrzeugs 62 empfangen wird. Die Empfangseinrichtung 32 und die Sendeeinrichtung 20 sind also mittels des Signals 24 miteinander zu koppeln.

Das Signal 24 wird von der Empfangseinrichtung 32 des Anhängerfahrzeugs 62 mittels eines weiteren Signals 70 an die Empfangseinrichtung 32 des Zugfahrzeugs 64 und weiter an die Sperreinrichtung 22 am Zugfahrzeug 64 übermittelt. Die Sperreinrichtung 22 blockiert dann bei anliegendem Signal 70 den Lastkraftwagen 12 so, dass ein Wegfahren bzw. Wegrollen verhindert ist. Insbesondere wird die Bremse 40 zum Verhindern des Wegrollens blockiert und/oder das Wegfahren durch ein Blockieren des Motorstarters 54 verhindert.

Bei einem Lager 16, welches eine große Lagerfläche aufweist, in dem zahlreiche Ein- und Auslagerbewegungen stattfinden, sind mehrere Laderampen 14 nebeneinander angeordnet. Dadurch sind auch mehrere nebeneinander angeordnete Laderampensicherungseinrichtungen 10 notwendig. Aufgrund der vergleichsweise geringen Reichweite 66 des Signals 24 ist dabei eine Überschneidung der Signale 24 von mehreren Signalvorrichtungen 20 weitestgehend vermieden. Eine eindeutige Zuordnung der jeweiligen Laderampe 14 zu dem jeweiligen Lastkraftwagen 12 ist so einfacher zu realisieren.

### Bezugszeichenliste

- 10: Laderampensicherungseinrichtung
- 12: Lastkraftwagen
- 14: Laderampe
- 16: Lager
- 18: Hubzylinder
- 20: Signalvorrichtung
- 22: Sperrvorrichtung
- 24: Signal
- 26: Laderaum
- 28: Ladefläche
- 30: Rahmen
- 32: Empfangseinrichtung
- 34: Führerhaus
- 36: Fahrfläche
- 38: Rad
- 40: Bremse
- 42: Bremsscheibe
- 44: Bremssattel
- 46: Tür
- 48: Fenster
- 50: Motor
- 52: Getriebe
- 54: Motorstarter
- 56: Erkennungseinrichtung
- 57: Sensor
- 58: Signalleitung
- 60: Sendeinrichtung
- 62: Anhängefahrzeug
- 64: Zugfahrzeug
- 66: Reichweite
- 68: Koppelelement
- 70: Signal

## Patentansprüche

1. Laderampensicherungseinrichtung (10) für eine auf einen Lastkraftwagen (12) zu legende Laderampe (14) mit einer der Laderampe (14) zugeordneten Signalvorrichtung (20) und einer dem Lastkraftwagen (12) zugeordneten Sperrvorrichtung (22),# wobei die Signalvorrichtung (20) dazu eingerichtet ist, ein Signal (24) über die Ladesituation an der Laderampe (14) zu senden,
**dadurch gekennzeichnet, dass** die Sperrvorrichtung (22) an Bord des Lastkraftwagens (12) angeordnet und ferner dazu eingerichtet ist, das Signal (24) zu empfangen und gemäß dem Signal (24) den Lastkraftwagen (12) selbst an einem Wegbewegen von der Laderampe (14) zu hindern.

2. Laderampensicherungseinrichtung nach Anspruch 1,
**dadurch gekennzeichnet, dass** die Sperrvorrichtung (22) mit einer Empfangseinrichtung (32) versehen ist, die zum Empfangen des Signals (24) der Signalvorrichtung (20) angepasst und am Lastkraftwagen (12) anzuordnen ist.

3. Laderampensicherungseinrichtung nach Anspruch 1 oder 2,
**dadurch gekennzeichnet, dass** die Sperrvorrichtung (22) dazu eingerichtet ist, eine Bremse (40) des Lastkraftwagens (12) zu sperren.

4. Laderampensicherungseinrichtung nach einem der Ansprüche 1 bis 3,
**dadurch gekennzeichnet, dass** die Sperrvorrichtung (22) dazu eingerichtet ist, ein Getriebe (52) des Lastkraftwagens (12) zu sperren.

5. Laderampensicherungseinrichtung nach einem der Ansprüche 1 bis 4,
**dadurch gekennzeichnet, dass** die Sperrvorrichtung (22) dazu eingerichtet ist, einen Motorstarter (54) des Lastkraftwagens (12) zu sperren.

6. Laderampensicherungseinrichtung nach einem der Ansprüche 1 bis 5,
**dadurch gekennzeichnet, dass** die Signalvorrichtung (20) mit einer Erkennungseinrichtung (56) versehen ist, mittels der die örtliche Lage der Laderampe (14) zu ermitteln ist.

7. Laderampensicherungseinrichtung nach einem der Ansprüche 1 bis 6,
**dadurch gekennzeichnet, dass** die Erkennungseinrichtung (56) mit einem Sensor (57) gestaltet ist, mittels dem die örtliche Lage der Laderampe (14) zu ermitteln ist.

8. Laderampensicherungseinrichtung nach einem der Ansprüche 1 bis 8,
**dadurch gekennzeichnet, dass** die Erkennungseinrichtung (56) mit einem Drucksensor gestaltet ist, mittels dem ein Aufliegen der Laderampe (14) auf dem Lastkraftwagen (12) zu ermitteln ist.

9. Laderampensicherungseinrichtung nach einem der Ansprüche 1 bis 7,
**dadurch gekennzeichnet, dass** die Erkennungseinrichtung (56) mit einem Näherungssensor gestaltet ist, mittels dem ein Aufliegen der Laderampe (14) auf dem Lastkraftwagen (12) zu ermitteln ist.

10. Laderampensicherungseinrichtung nach einem der Ansprüche 1 bis 9,
**dadurch gekennzeichnet, dass** die Signalvorrichtung (20) mit einer Sendeinrichtung (60) versehen ist, mittels der das Signal (24) über die Ladesituation an der Laderampe (14) der Signalvorrichtung (20), an den Lastkraftwagen (12) zu übertragen ist.

## Claims

1. Loading-ramp safety device (10) for a loading ramp (14) which is to be positioned on a lorry (12), having a signalling device (20) associated with the loading ramp (14) and a blocking device (22) associated with the lorry (12), wherein the signalling device (20) is adapted to send a signal (24) relating to the loading situation to the loading ramp (14),
**characterised in that** the blocking device (22) is arranged on board the lorry (12) and is further adapted to receive the signal (24) and, according to the signal (24), to prevent the lorry (12) itself from moving away from the loading ramp (14).

2. Loading-ramp safety device according to claim 1,
**characterised in that** the blocking device (22) is provided with a receiving device (32) which is suitable for receiving the signal (24) from the signalling device (20) and is to be arranged on the lorry (12).

3. Loading-ramp safety device according to claim 1 or 2,
**characterised in that** the blocking device (22) is adapted to block a brake (40) of the lorry (12).

4. Loading-ramp safety device according to any one of claims 1 to 3,
**characterised in that** the blocking device (22) is adapted to block a transmission (52) of the lorry (12).

5. Loading-ramp safety device according to any one of claims 1 to 4,
**characterised in that** the blocking device (22) is adapted to block a starter (54) of the lorry (12).

6. Loading-ramp safety device according to any one of claims 1 to 5,
**characterised in that** the signalling device (20) is provided with a detection device (56) by means of which the position of the loading ramp (14) is to be determined.

7. Loading-ramp safety device according to any one of claims 1 to 6,
**characterised in that** the detection device (56) is configured with a sensor (57) by means of which the position of the loading ramp (14) is to be determined.

8. Loading-ramp safety device according to any one of claims 1 to 7,
**characterised in that** the detection device (56) is configured with a pressure sensor by means of which it is to be determined that the loading ramp (14) is positioned on the lorry (12).

9. Loading-ramp safety device according to any one of claims 1 to 8,
**characterised in that** the detection device (56) is configured with a proximity sensor by means of which it is to be determined that the loading ramp (14) is positioned on the lorry (12).

10. Loading-ramp safety device according to any one of claims 1 to 9,
**characterised in that** the signalling device (20) is provided with a transmitting device (60) by means of which the signal (24) from the signalling device (20) relating to the loading situation of the loading ramp (14) is to be transmitted to the lorry (12).

## Revendications

1. Dispositif de sécurisation de rampe de chargement (10) pour une rampe de chargement (14) à placer sur un poids lourd (12) avec un dispositif de signalisation (20) associé à la rampe de chargement (14) et avec un dispositif de blocage (22) associé au poids lourd (12), le dispositif de signalisation (20) étant conçu pour émettre un signal (24) relatif à la situation de chargement au niveau de la rampe de chargement (14) ; **caractérisé en ce que** le dispositif de blocage (22) est disposé au bord du poids lourd (12) et est en outre conçu pour recevoir le signal (24) et, en fonction du signal (24), pour empêcher le poids lourd (12) en lui-même de partir de la rampe de chargement (14).

2. Dispositif de sécurisation de rampe de chargement selon la revendication 1, **caractérisé en ce que** le dispositif de blocage (22) est pourvu d'un dispositif récepteur (32) conçu pour adapter le signal (24) du dispositif de signalisation (20) et pour être disposé au niveau du poids lourd (12).

3. Dispositif de sécurisation de rampe de chargement selon la revendication 1 ou 2, **caractérisé en ce que** le dispositif de blocage (22) est conçu pour bloquer un frein (40) du poids lourd (12).

4. Dispositif de sécurisation de rampe de chargement selon l'une quelconque des revendications 1 à 3, **caractérisé en ce que** le dispositif de blocage (22) est conçu pour bloquer une boîte de vitesses (52) du poids lourd (12).

5. Dispositif de sécurisation de rampe de chargement selon l'une quelconque des revendications 1 à 4, **caractérisé en ce que** le dispositif de blocage (22) est conçu pour bloquer un démarreur de moteur (54) du poids lourd (12).

6. Dispositif de sécurisation de rampe de chargement selon l'une quelconque des revendications 1 à 5, **caractérisé en ce que** le dispositif de signalisation (20) est pourvu d'un dispositif de détection (56) à l'aide duquel la position locale de la rampe de chargement (14) est déterminée.

7. Dispositif de sécurisation de rampe de chargement selon l'une quelconque des revendications 1 à 6, **caractérisé en ce que** le dispositif de détection (56) est réalisé avec un capteur (57) à l'aide duquel la position locale de la rampe de chargement (14) est déterminée.

8. Dispositif de sécurisation de rampe de chargement selon l'une quelconque des revendications 1 à 7, **caractérisé en ce que** le dispositif de détection (56) est réalisé avec un capteur de pression à l'aide duquel un appui de la rampe de chargement (14) sur le poids lourd (12) est déterminé.

9. Dispositif de sécurisation de rampe de chargement selon l'une quelconque des revendications 1 à 8, **caractérisé en ce que** le dispositif de détection (56) est réalisé avec un capteur d'approche à l'aide duquel un appui de la rampe de chargement (14) sur le poids lourd (12) est déterminé.

10. Dispositif de sécurisation de rampe de chargement selon l'une quelconque des revendications 1 à 9, **caractérisé en ce que** le dispositif de signalisation (20) est pourvu d'un dispositif d'émission (60) à l'aide duquel le signal (24) est transmis au poids lourd (12) via la situation de chargement au niveau de la rampe de chargement (14) du dispositif de signalisation (20).
